(19) Europäisches Patentamt / European Patent Office / Office européen des brevets

(11) **EP 2 732 308 B1**

(12) **EUROPÄISCHE PATENTSCHRIFT**

(45) Veröffentlichungstag und Bekanntmachung des Hinweises auf die Patenterteilung:
**29.07.2015   Patentblatt 2015/31**

(21) Anmeldenummer: **12740280.8**

(22) Anmeldetag: **27.06.2012**

(51) Int Cl.:
*G01S 7/40* (2006.01)   *G01S 13/95* (2006.01)

(86) Internationale Anmeldenummer:
**PCT/AT2012/050087**

(87) Internationale Veröffentlichungsnummer:
**WO 2013/010199 (24.01.2013 Gazette 2013/04)**

(54) **VERFAHREN ZUR DETEKTION VON MESSFEHLERN ODER ARTEFAKTEN IN WETTERRADARBILDERN**

METHOD FOR DETECTING MEASURING ERRORS OR ARTIFACTS IN WEATHER RADAR IMAGES

PROCÉDÉ DE DÉTECTION D'ERREURS DE MESURES OU D'ARTÉFACTS DANS DES IMAGES RADAR MÉTÉOROLOGIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.07.2011   AT 10532011**

(43) Veröffentlichungstag der Anmeldung:
**21.05.2014   Patentblatt 2014/21**

(73) Patentinhaber:
- **MeteoServe Wetterdienst GmbH**
  **1030 Wien (AT)**
- **Austro Control Österreichische Gesellschaft für Zivilluftfahr mit beschränkter Haftung**
  **1030 Wien (AT)**
- **Joanneum Research Forschungsgesellschaft mbH**
  **8010 Graz (AT)**
- **AIT Austrian Institute of Technology GmbH**
  **1220 Wien (AT)**

(72) Erfinder:
- **GANSTER, Harald**
  **A-8042 Graz (AT)**
- **MAYER, Heinz**
  **A-8043 Graz (AT)**
- **MAYER, Stefan**
  **A-1160 Wien (AT)**
- **KALTENBÖCK, Rudolf**
  **A-1190 Wien (AT)**
- **CROONEN, Gerardus**
  **A-1150 Wien (AT)**
- **NOWAK, Christoph**
  **A-1100 Wien (AT)**

(74) Vertreter: **Wildhack & Jellinek Patentanwälte**
**Landstraßer Hauptstraße 50**
**1030 Wien (AT)**

(56) Entgegenhaltungen:
**EP-A2- 2 182 386      US-A1- 2004 239 550**

- **VALLIAPPA LAKSHMANAN ET AL: "An Automated Technique to Quality Control Radar Reflectivity Data", JOURNAL OF APPLIED METEOROLOGY AND CLIMATOLOGY, Bd. 46, Nr. 3, 1. März 2007 (2007-03-01), Seiten 288-305, XP55038019, ISSN: 1558-8424, DOI: 10.1175/JAM2460.1**
- **SVETLANA BACHMANN ET AL: "Adaptive Technique for Clutter and Noise Supression in Weather Radar Exposes Weak Echoes Over an Urban Area", STATISTICAL SIGNAL PROCESSING, 2007. SSP '07. IEEE/SP 14TH WORKSH OP ON, IEEE, PI, 1. August 2007 (2007-08-01), Seiten 438-442, XP031134107, ISBN: 978-1-4244-1197-9**
- **SHIH-YIH YOUNG ET AL: "Intelligent hazard avoidance system", DIGITAL AVIONICS SYSTEMS CONFERENCE, 2009. DASC '09. IEEE/ AIAA 28TH, IEEE, PISCATAWAY, NJ, USA, 23. Oktober 2009 (2009-10-23), Seiten 5.A.4-1, XP031575891, ISBN: 978-1-4244-4078-8**

- Cathy Kessinger: "THE RADAR ECHO CLASSIFIER: A FUZZY LOGIC ALGORITHM FOR THE WSR-88D", , 1. Februar 2003 (2003-02-01), XP55038015, Gefunden im Internet: URL:http://www.eol.ucar.edu/rsf/NEXRAD/dq_fy02/kessinger_ai2003.pdf [gefunden am 2012-09-12]

- Matthias Steiner: "Use of Three-Dimensional Reflectivity Structure for Automated Detection and Removal of Nonprecipitating Echoes in Radar Data", , 1. Mai 2002 (2002-05-01), XP55038014, Gefunden im Internet: URL:http://journals.ametsoc.org/doi/pdf/10 . 1175/1520-0426(2002)019<0673:UOTDRS>2.0.C O;2 [gefunden am 2012-09-12]

**Beschreibung**

Die Erfindung betrifft ein Verfahren zur Detektion von Messfehlern oder Artefakten in Wetterradarbildern gemäß dem Patentanspruch 1.

Das erfindungsgemäße Verfahren wird vorteilhafterweise im Bereich der automatisierten Prüfung von Wetterradarbildern eingesetzt.

Ferner betrifft die Erfindung einen Datenträger, auf dem ein Computerprogramm zur Durchführung des erfindungsgemäßen Verfahrens abgespeichert worden ist.

Schließlich betrifft die Erfindung ein Computerprogramm zur Durchführung des erfindungsgemäßen Verfahrens.

Aus der Veröffentlichung Bachmann, DeBrunner, Zrnic, Yeary "Adaptive Technique for Clutter and Noise Supression in Weather Radar exposes weak Echoes over an Urban Area" ist eine adaptive Methode zur Unterdrückung von Rauschen in Wetterradarechos beschrieben, die eine gute Detektion von schwachen Echos ermöglicht, die von Störeinflüssen maskiert oder überdeckt sind.

Aus der US-Patentanmeldung US 2004/0239550 A1 ist ein Wettervorhersagesystem zur kurzzeitigen Vorhersage von Sturmzellen mittels eines Flugzeugs bekannt, das ein modifiziertes Wetterradarsystem verwendet.

Aus der Veröffentlichung Steiner, Smith " Use of Three-Dimensional Reflectivity Structure for Automated Detection and Removal of Nonprecipitating Echoes in Radar Data" ist ein Verfahren bekannt, mit dem anormale Konditionen in Wetterradardaten detektierbar sind und ein verbesserter Algorithmus dargestellt wird, mit dem Radardaten verbessert werden können.

Aus Young, Jerome "Intelligent Hazard Avoidance System" ist ein weiteres Verfahren zur Wettervorhersage bekannt, mit dem gefährliche Situationen verbessert vorhergesagt werden können.

Grundsätzlich besteht bei bekannten Verfahren zur Auswertung und Aufbereitung von Wetterradarbilder das Problem, dass die Wetterradarbilder von Messfehlern oder Artefakten überlagert sind. Es treten hierbei grundsätzlich unterschiedlichste Arten von Störungen der Wetterradarbilder auf. Die verschiedenen Fehler werden durch unterschiedliche physikalische Effekte und Phänomene hervorgerufen. Insgesamt sind die Gründe für manche Fehler noch nicht vollständig erforscht, sodass eine messtechnische Behebung der Fehler nicht ohne weiteres möglich ist.

Es bestehen drei unterschiedliche Hauptklassen von Fehlerphänomenen, nämlich statische Abschattungen, etwa durch Berge oder sonstige Hindernisse, linienförmige oder kreisbogenförmige Artefakte, deren Herkunft vermutlich mit unbekannten Strahlungsquellen, wie Funksendern, WLANs oder Militärfunk zusammenhängt sowie sonstige Fehler, deren Zuordnung und Herkunft unbekannt ist.

Aufgabe der Erfindung ist es, ein Verfahren zur Detektion von Messfehlern und Artefakten in Wetterradarbildern zur Verfügung zu stellen, das Messfehler und Artefakte wirksam erkennt und deren Position identifiziert.

Die Erfindung löst diese Aufgabe mit einem Verfahren mit den Merkmalen des Kennzeichens des unabhängigen Patentanspruchs 1. Die Erfindung löst diese Aufgabe weiters mit den Merkmalen des Kennzeichens des Patentanspruchs 9.

Die Erfindung betrifft weiters einen Datenträger, auf dem ein Computerprogramm zur Durchführung des erfindungsgemäßen Verfahrens abgespeichert ist. Mit einem solchen Datenträger kann bevorzugt das erfindungsgemäße Verfahren auf einem Computer durchgeführt werden.

Erfindungsgemäß ist bei einem Verfahren zur Detektion von Messfehlern oder Artefakten in einem mittels eines Wetterradars aufgenommenen Wetterradarbildes, wobei

a) das Wetterradarbild in Form eines zweidimensionalen Digitalbildes vorliegt, wobei jedes Pixel des Wetterradarbildes jeweils einem Teilgebiet des mit dem Wetterradar überwachten Gebiets zugeordnet wird, und

b) jedem Pixel ein Reflektivitätswert zugeordnet wird und jeder Reflektivitätswert der mit dem Wetterradar ermittelten elektromagnetischen Reflektivität der Luftschichten im Bereich des dem jeweiligen Pixel zugeordneten Teilgebiets entspricht, vorgesehen, dass vorab in einem Kalibrierverfahren

c) eine Anzahl von störungsbehafteten Referenzwetterradarbildern herangezogen wird, aus denen vorab störungsbehaftete Referenzbildabschnitte einer vorgegebenen Größe ausgewählt werden, die Störungen aufweisen,

d) eine Anzahl von weiteren Referenzwetterradarbildern herangezogen wird, aus denen störungsfreie Referenzbildabschnitte der vorgegebenen Größe ausgewählt werden,

e) die störungsbehafteten Referenzbildabschnitte und die störungsfreien Referenzbildabschnitte einem Optimierungsverfahren zugrundegelegt werden, wobei im Zuge des Optimierungsverfahrens eine Entscheidungsfunktion ermittelt wird, die als Argument einen Bildabschnitt der vorgegebenen Größe erhält und als Ergebnis einen aus zumindest zwei voneinander unterschiedlichen Resultatwerten liefert,

f) wobei im Zuge des Optimierungsverfahrens eine Optimierung dahingehend durchgeführt wird, dass die Entscheidungsfunktion bei Anwendung auf einen der störungsbehafteten Referenzbildabschnitte einen eine Störung indizierenden ersten Resultatwert liefert und bei Anwendung auf einen der störungsfreien Referenzbildabschnitte einen vom ersten Resultatwert abweichenden zweiten Resultatwert liefert, und anschließend zur Detektion von Messfehlern und Artefakten im Wetterradarbild

g) die Entscheidungsfunktion auf einen Teilbereich oder mehrere Teilbereiche des Wetterradarbildes angewendet wird und der jeweilige Resultatwert der Entscheidungsfunktion zur Beurteilung herangezogen wird, ob im betreffenden überprüften Teilbereich des Wetterradarbildes ein Messfehler oder Artefakt vorliegt. Mit einem solchen Verfahren können auf einfache Weise Artefakte detektiert werden, selbst wenn deren Herkunft unbekannt ist.

Zur Verbesserung der Zuordnung aufgefundener Fehler zu einzelnen Teilbereichen des Wetterradarbilds kann vorgesehen sein, dass die Position oder das Auftreten eines aufgefundenen Fehlers oder Artefakts demjenigen Teilgebiet zugeordnet wird, das einem Teilbereich des Wetterradarbildes zugeordnet ist, für das das jeweilige Ergebnis der Entscheidungsfunktion dem eine Störung indizierenden ersten Resultatwert entspricht.

Eine besonders einfach durchführbare Ausgestaltung des erfindungsgemäßen Verfahrens kann erreicht werden, indem eine Anzahl von Teilbereichen des Wetterradarbilds vorgegeben wird, die jeweils die vorgegebene Größe aufweisen.

Zur Unterscheidung unterschiedlicher Arten von Niederschlagszellen kann vorgesehen sein, dass eine Vielzahl von zweiten Resultatwerten vorgegeben wird, wobei für jeden zweiten Resultatwert jeweils eine Anzahl von störungsfreien Referenzbildabschnitten vorgegeben wird, in deren zugeordnetem Gebiet jeweils dieselbe Art von Niederschlagszellen vorherrscht,

wobei im Zuge des Optimierungsverfahrens eine Optimierung dahingehend durchgeführt wird, dass die Entscheidungsfunktion bei Anwendung auf einen der störungsbehafteten Referenzbildabschnitte einen eine Störung indizierenden ersten Resultatwert liefert und bei Anwendung auf einen der störungsfreien Referenzbildabschnitte einen der zweiten Resultatwerte liefert, und

die Entscheidungsfunktion auf einen Teilbereich oder mehrere Teilbereiche des Wetterradarbildes angewendet wird und der jeweilige Resultatwert der Entscheidungsfunktion zur Beurteilung herangezogen wird, ob im betreffenden Teilbereich des Wetterradarbildes ein Messfehler oder Artefakt oder eine der vorgegebenen Arten von Niederschlagszellen vorliegt.

Besonders gute Unterscheidungen zwischen fehlerbehafteten und fehlerfreien Teilabschnitten des Wetterradarbilds können erreicht werden, indem als Optimierungsverfahren ein K-Nearest-Neighbor-Verfahren herangezogen wird.

Zum gleichen Zweck kann alternativ oder zusätzlich vorgesehen sein, dass für jeden Resultatwert und/oder für jeden einer Art von Niederschlagszelle zugeordneten zweiten Resultatwert jeweils eine Anzahl von 50 bis 500, insbesondere 200 bis 350, Referenzbildabschnitten vorgegeben wird.

Eine vorteilhafte Abwägung zwischen Erkennungsgenauigkeit und Ressourcenbedarf kann vorgenommen werden, indem die aus den Wetterradarbildern entnommenen Teilbereiche, die störungsbehafteten Referenzbildabschnitte sowie die störungsfreien Referenzbildabschnitte rechteckige oder quadratische Form mit einer Kantenlänge zwischen 30 und 150 Pixel aufweisen.

Zur Erstellung eines Fehlerbilds kann vorgesehen sein, dass jedem der Teilbereiche ein, insbesondere in seinem Zentrum befindliches, Bezugspixel zugeordnet wird und dass diesem Bezugspixel der jeweilige Resultatwert zugeordnet wird, und dass Pixel, denen der erste Resultatwert zugeordnet ist, als mit Messfehlern oder Artefakten behaftete fehlerhafte Pixel ausgewählt und/oder markiert werden.

Weiters sieht die Erfindung zusätzlich oder alternativ zur vorteilhaften Detektion von Artefakten oder Messfehlern bei Wetterradarbildern vor, dass bei einem Verfahren zur Detektion von Messfehlern oder Artefakten in einem mittels eines Wetterradars aufgenommenen Wetterradarbildes, insbesondere nach einem der vorangehenden Ansprüche, wobei

a) das Wetterradarbild in Form eines zweidimensionalen Digitalbildes vorliegt, wobei jedes Pixel des Wetterradarbildes jeweils einem Teilgebiet des mit dem Wetterradar überwachten Gebiets zugeordnet wird,

b) jedem Pixel ein Reflektivitätswert zugeordnet wird und jeder Reflektivitätswert der mit dem Wetterradar ermittelten elektromagnetischen Reflektivität der Luftschichten im Bereich des dem jeweiligen Pixel zugeordneten Teilgebiets entspricht,

vorgesehen ist, dass

a) eine Anzahl von geometrischen Objekten in Bezug auf das Wetterradarbild vorgegeben wird,

b) basierend auf den vorgegebenen geometrischen Objekten eine Hough-Transformation durchgeführt wird, wodurch ein Hough-Transformationsbild erstellt wird, wobei jedem der vorgegebenen geometrischen Objekte jeweils ein Pixel des Hough-Transformationsbilds zugeordnet wird,

c) dass diejenigen Pixel des Hough-Transformationsbilds ausgewählt werden, deren Wert einen vorgegebenen oder einen anhand des Hough-Transformationsbilds ermittelten Schwellenwert überschreitet, und

d) dass diejenigen vorgegebenen geometrischen Objekte, die einem der ausgewählten Pixel des Hough-Transformationsbilds zugeordnet sind ermittelt werden, und dass Pixel innerhalb dieser geometrischen Objekte als mit Messfehlern oder Artefakten behaftete fehlerhafte Pixel ausgewählt und/oder markiert werden.

Ein besonders vorteilhaftes Vorgehen zur Detektion von Artefakten liegt darin, dass das Hough-Transformationsbild zweidimensional ist, wobei jedem der Pixel des Hough-Transformationsbilds jeweils ein im Wetterradarbild verlaufendes, mit jeweils zwei Parametern parametrisiertes geometrisches Objekt zugeordnet ist, wobei die beiden Koordinaten des jeweiligen Pixels des Hough-Transformationsbilds jeweils mit einem der Parameter übereinstimmen.

Besonders gute Erkenntnisgenauigkeit bei bekannten Artefakten kann dadurch erzielt werden, dass als geometrische Objekte Kreisbögen herangezogen werden, wobei die Kreisbögen einen vorgegebenen gemeinsamen Mittelpunkt aufweisen, der mit der Lage des Wetterradars im Wetterradarbild übereinstimmt, wobei als Parameter der Radius des Kreisbogens sowie ein vorgegebener Winkelbereich und/oder Abschnitt herangezogen wird, wobei der jeweilige Kreisbogen vorzugsweise in eine Anzahl von einander nicht überlappenden Abschnitten unterteilt wird, dessen jeweiliger Winkelbereich in Bezug auf den Kreismittelpunkt jeweils einem Parameterwert entspricht.

Alternativ oder zusätzlich kann zum selben Zweck vorgesehen sein, dass als geometrische Objekte Geraden herangezogen werden, wobei als Parameter die Verlaufsrichtung der Geraden sowie die Koordinatendifferenz eines der Randpunkte, vorteilhafterweise im linken oder unteren Rand, des Wetterradarbilds herangezogen wird, durch den die Gerade verläuft.

Zum selben Zweck kann alternativ oder zusätzlich vorgesehen sein, dass als geometrische Objekte Umfangslinien von Ellipsen verwendet werden, deren Mittelpunkt oder Brennpunkt mit der Lage des Wetterradars im Wetterradarbild übereinstimmt, wobei als Parameter die Längen der beiden Halbachsen vorgegeben werden.

Eine vorteilhafte Möglichkeit der Unterscheidung zwischen fehlerbehafteten und fehlerfreien Pixeln sieht vor, dass als Schwellenwert ein Wert von 60% bis 90% des maximalen Pixelwerts innerhalb des Hough-Transformationsbilds herangezogen wird.

Um widersprüchliche Ergebnisse zwischen den beiden voranstehend vorgeschlagenen grundsätzlichen Vorgehensweisen zu vermeiden, kann vorgesehen sein,

a) dass das Wetterradarbild mit dem Verfahren nach Anspruch 8 auf Messfehler oder Artefakte untersucht wird und ein Fehlerbild erstellt wird,
b) dass Wetterradarbild mit dem Verfahren nach einem der Ansprüche 9 bis 14 auf Messfehler oder Artefakte untersucht wird, und
c) dass ein Pixel dann als fehlerhaftes Pixel ausgewählt und/oder markiert wird, wenn es zumindest nach einem der beiden vorangegangenen Schritte a) oder b), insbesondere nach beiden Schritten a) und b) als fehlerhaftes Pixel ausgewählt und/oder markiert worden ist.

Eine weitere Verbesserung zur genaueren Unterscheidung fehlerhafter und fehlerfreie Bildbereiche sieht vor, dass für den Fall, dass ein Pixel nur in einem der beiden Schritte a) und b) des Anspruchs 15 als fehlerhaftes Pixel erkannt und/oder markiert worden ist, eine Anzahl von, insbesondere zwei, der Aufnahme des jeweiligen Wetterradarbilds unmittelbar vorangehend mit demselben Wetterradar aufgenommenen weiteren Wetterradarbildern herangezogen wird, wobei das Vorliegen eines Messfehlers oder Artefakts dann bestätigt wird, wenn der Resultatwert für das jeweilige Pixel in den unmittelbar vorangehend aufgenommenen, weiteren Wetterradarbildern nicht identisch ist.

Zur zusätzlichen Verbesserung der Detektionsgenauigkeit kann vorgesehen sein, dass zwischen den beiden Aufnahmezeitpunkten der Wetterradarbilder zumindest 2,5 Minuten, insbesondere 2,5 Minuten oder 5 Minuten, liegen.

Vier Ausführungsbeispiele der Erfindung werden anhand der im folgenden dargestellten Figuren ohne Einschränkung des allgemeinen erfinderischen Gedankens dargestellt.

**Fig. 1** zeigt ein Wetterradarbild mit einer Pixelmaske, die einen Bildbereich mit fehlerhaften Reflektivitätswerten darstellt.
**Fig. 2** zeigt schematisch ein Gebiet mit einem Wetterradar.
**Fig. 3** zeigt vier typischerweise auftretende Fehler in Wetterradarbildern
**Fig. 4** zeigt schematisch die Referenzwetterradarbilder sowie die darauf befindlichen störungsbehafteten Referenzbildabschnitte und störungsfreien Referenzbildabschnitte.
**Fig. 5** zeigt schematisch die Entscheidungsfunktion.
**Fig. 6** zeigt schematisch ein auf Grundlage eines Wetterradarbildes erstelltes Fehlerbild.
**Fig. 7** zeigt eine Anzahl von Geraden als Grundlage für die Hough-Transformation.
**Fig. 8** zeigt eine Anzahl von Kreisbögen als Grundlage für die Hough-Transformation.

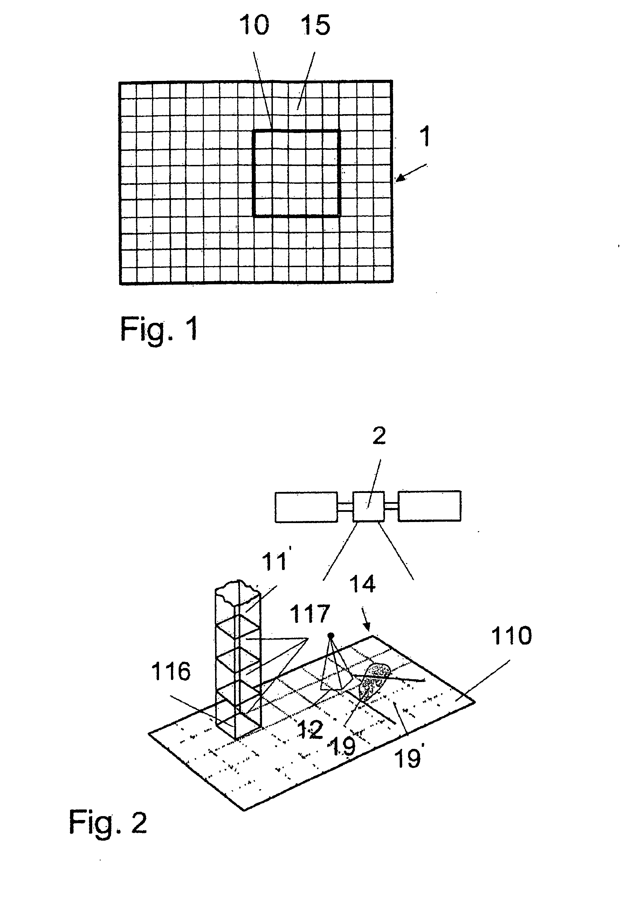

Wetterradarbilder 1 **(Fig. 1)** werden von einem oder mehreren Wetterradars 12 erstellt und in der Vorhersage von Unwettern im Bereich der kommerziellen Meteorologie eingesetzt, etwa zur Regelung des Luftverkehrs oder zur Warnung vor Unwettern, starken Niederschlägen usw.

Wetterradarbilder 1 liegen typischerweise in Form von zweidimensionalen Digitalbildern **(Fig. 1),** umfassend eine Anzahl von rasterförmig angeordneten Pixeln 15 vor. Der von einem oder mehreren Wetterradars 12 überwachte Bereich ist in eine Anzahl von Teilgebieten 110 zerlegt, wobei jedes Teilgebiet 110 jeweils einem Pixel 15 des Wetterradarbilds 1 entspricht **(Fig. 2)**. In kommerziellen Anwendungen weisen die Teilgebiete 110, die einem Pixel 15 entsprechen, etwa die Fläche von einem Quadratkilometer auf. In den vorliegenden Ausführungsbeispielen sind die Teilgebiete 110 quadratisch. Die Pixel 15 können jedoch grundsätzlich auch eine andere Form aufweisen, etwa eine rechteckige Form. Die Pixel 15 überdecken den überwachten Bereich vollständig.

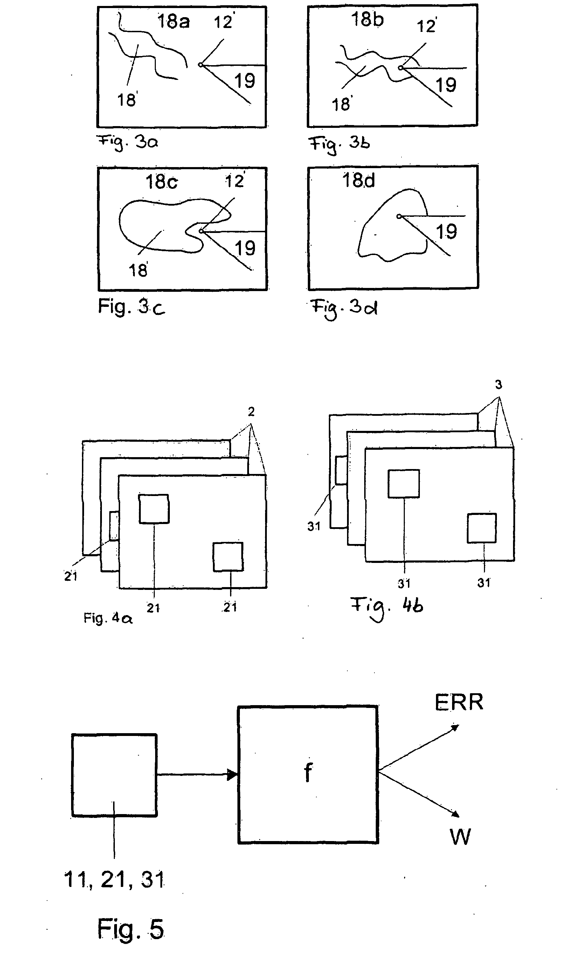

Bei der Aufnahme des Wetterradarbilds 1 mittels des Wetterradars 12 kann die einem Teilbereich 110 bzw. einem Pixel 15 zugeordnete Reflektivität folgendermaßen bestimmt werden: Das Wetterradar 1 misst die Reflektivität von Raumvolumina 117, die übereinander über der Fläche 116 des Teilgebiets 110 in Form einer Säule angeordnet sind. Jedem der Raumvolumina 117 ist ein seiner jeweiligen Reflektivität entsprechender Digitalwert zugeordnet. Innerhalb des säulenförmigen Teilgebiets 110 wird dasjenige Raumvolumen 117 ermittelt, in dem die höchste Reflektivität vorherrscht. Anschließend wird der Reflektivitätswert dieses Raumvolumens 117 als Wert für die Reflektivität des gesamten Teilgebietes 110 herangezogen. Aus diesem Wert lässt sich der gesamte zu erwartende Niederschlag in der Nähe des Teilgebiets 110 ermitteln. Somit lässt sich ein zweidimensionales Digitalbild, im Folgenden als Wetterradarbild 1 bezeichnet, erstellen, wobei jedem Teilgebiet 110 bzw. jedem Pixel 15 ein digitaler Wert für die Reflektivität zugewiesen ist. Derartige Bilder sind in **Fig. 3, 4** dargestellt.

Wie in **Fig. 3** dargestellt, können die Wetterradarbilder 1 fehlerhaft sein. Die Fehler von Wetterradarbildern 1 können unterschiedliche Ursachen haben, die Gründe für manche der Fehler sind bislang noch nicht erforscht, sodass eine Behebung dieser Fehler durch Verbesserung der Messmethoden nicht möglich ist.

Fehler in Wetterradarbildern 1 können beispielsweise von statischen Abschattungen 19 herrühren, die etwa durch Berge oder Hindernisse verursacht werden, die sich im Aufnahmebereich des Wetterradars 12 befinden. Solche statische Abschattungen 19 sind relativ einfach zu detektieren und ändern sich über die Zeit nicht, sofern sich das Hindernis weiterhin im Aufnahmebereich des Wetterradars 12 befindet. Neben den Abschattungen gibt es noch eine Anzahl weiterer Phänomene, die zu Fehlern bei der Aufnahme von Wetterradarbildern führen können.

**Fig. 3** zeigt vier Bilder mit unterschiedlicher Wetterlage, wobei allen Bildern gemeinsam ist, dass im Bereich der Abschattung 19 die jeweiligen Reflektivitätswerte I1, ... konstant sehr niedrig, insbesondere Null, sind. Bild 18a zeigt ein erstes Wetterradarbild mit einer Niederschlagszelle 180. Die weiteren in **Fig. 3** dargestellten Wetterradarbilder 18b - 18d zeigen die Niederschlagszelle 180 im weiteren Zeitverlauf. Im Wetterradarbild 18b befindet sich die Niederschlagszelle 180 im Bereich desjenigen Pixels 120, das dem Teilgebiet 110 zugeordnet ist, in dem sich das Wetterradar 12 befindet.

Im folgenden wird nunmehr dargestellt, wie Fehler in Wetterradarbildern 1 detektiert werden können. Die Fehlererkennung sowie die Fehlerlokalisierung stellen wesentliche Hilfsmittel für die Bestimmung der Zuverlässigkeit von Aussagen dar, die auf Grundlage der Wetterradarbilder getroffen worden sind. Weiters bildet das Ergebnis der Fehlerlokalisierung den Ausgangspunkt für Fehlerkorrekturmaßnahmen.

Vor der Durchführung des eigentlichen Fehlerdetektionsverfahrens werden in einem ersten Kalibrierungsschritt aus bereits zuvor aufgenommenen Referenzwetterradarbildern 2 störungsbehaftete Referenzbildabschnitte 21 ausgewählt **(Fig. 4)**. Diese Auswahl kann durch Experten durchgeführt werden. Die Experten beurteilen nach ihrer persönlichen Kenntnis die einzelnen Referenzwetterradarbilder 2, 3 und wählen die Referenzbildabschnitte 21, 31 nach ihrer Erfahrung aus. Es wird zwischen störungsbehafteten Referenzbildabschnitten 21 und störungsfreien Referenzbildabschnitten 31 unterschieden, die voneinander gesondert vorliegen und abgespeichert werden.

Alternativ können die Referenzbildabschnitte 21, 31 auch auf der Grundlage von Vergleichsmessungen, die mit anderen Wetterradars 12 oder sonstigen Wettermessvorrichtungen erstellt worden sind, ermittelt werden. Entspricht etwa ein Referenzbildabschnitt 21, der für ein zu überwachendes Gebiet aufgenommen worden ist, nicht dem Referenzbildabschnitt 21, der mittels eines anderen Wetterradars 12 für dasselbe zu überwachende Gebiet aufgenommen worden ist, so kann davon ausgegangen werden, dass einer der beiden Referenzbildabschnitte 21 störungsbehaftet ist. In diesem Fall könnte entweder durch einen Experten oder durch einen Vergleich mit anderen Wetterradardaten oder anderen Wetterdaten desselben zu überwachenden Gebiets ermittelt werden, welcher der beiden Referenzbildabschnitte 21, 21' fehlerhafte Daten anzeigt.

Zudem wird eine Anzahl von weiteren Referenzwetterradarbildern herangezogen, aus denen störungsfreie Referenzbildabschnitte 31 ausgewählt werden. Störungsfreie Referenzbildabschnitte 31 können von Experten aufgrund ihrer Erfahrung erkannt werden. Alternativ besteht wiederum die Möglichkeit der automatischen Ermittlung durch Vergleich mit anderen Wetterdaten. Kann ein Abschnitt mit dem vorstehend angegebenen automatischen Vorgehen nicht als störungsbehafteter Referenzbildabschnitt 21 klassifiziert oder erkannt werden, und entsprechen die mit dem Wetterradar 12 aufgenommenen Wetterradarbilder Wetterdaten, die mit anderen Methoden, etwa mittels Satellitenbildern ermittelt worden sind, so kann dieser Abschnitt als störungsfreier Referenzbildabschnitt 31 verwendet werden. Gegebenenfalls können auch nur diejenigen Bildabschnitte als störungsfreier Referenzbildabschnitte 31 verwendet werden, die mit anderen Wetterdaten und Wetterradardaten besonders gut übereinstimmen.

Es wird sowohl für die störungsbehafteten Referenzbildabschnitte als auch für die störungsfreien Referenzbildabschnitte 31 eine gemeinsame Bildgröße vorgegeben, die für sämtliche störungsbehafteten und störungsfreien Referenzbildabschnitte 21, 31 gleich ist. Im vorliegenden Fall weisen die störungsbehafteten sowie die störungsfreien Bildabschnitte 21, 31 eine quadratische Form mit einer Kantenlänge von 100 Pixeln auf. Grundsätzlich können die störungsbehafteten Referenzbildabschnitte 21 sowie die störungsfreien Referenzbildabschnitte 31 eine beliebige Form aufweisen, als vorteilhaft hat sich jedoch eine rechteckige oder quadratische Form erwiesen, wobei die Kantenlänge zwischen 20 und 150 Pixel beträgt.

Kleinere Kantenlängen führen üblicherweise zu einer geringeren Ressourcenbelastung und zu einer schlechteren Detektion und einer verschlechterten Erkennungsgenauigkeit. Größere Kantenlängen führen hingegen zu verlängerten Rechenzeiten bei einer verbesserten Genauigkeit. Im Bereich zwischen 20 und 150 Pixel besteht hingegen ein vorteilhaftes Verhältnis von Ressourcenaufwand, Detektionsgenauigkeit und Positionserkennung.

In einem weiteren, dem Kalibrierverfahren zugehörigen Schritt werden die störungsbehafteten Referenzbildabschnitte 21 und die störungsfreien Referenzbildabschnitte 31 einem Optimierungsverfahren zugeführt. Im folgenden Ausführungsbeispiel wird als Optimierungsverfahren ein K-Nearest-Neighbor-Verfahren angewendet. Alternativ können anstelle eines K-Nearest-Neighbor-Verfahrens auch andere Klassifikationsverfahren wie neuronale Netze verwendet werden.

Im Zuge des Optimierungsverfahrens wird eine Entscheidungsfunktion f **(Fig. 5)** ermittelt, die als Argument jeweils einen aus dem Wetterradarbild 1 ermittelten Bildabschnitt 11 erhält, der dieselbe Größe und Form aufweist wie die störungsbehafteten Referenzbildabschnitte 21 und die störungsfreien Referenzbildabschnitte 31. Im vorliegenden Fall werden der Entscheidungsfunktion f die Reflektivitätswerte der störungsbehafteten Referenzbildabschnitte 21 sowie der störungsfreien Referenzbildabschnitte 31 übergeben. Aufgrund der für dieses Ausführungsbeispiel gewählten Größe von 100 x 100 Pixeln erhält die Entscheidungsfunktion somit 10.000 Eingangsgrößen. Das Optimierungsverfahren wird nun dahingehend geführt, dass die Entscheidungsfunktion f bei Anwendung auf einen störungsbehafteten Referenzbildabschnitt 21 einen ersten, eine Störung indizierenden Resultatwert ERR liefert. Nach Abschluss des Optimierungsverfahrens sollen somit sämtliche störungsbehaftete Referenzbildabschnitte 21 jedenfalls den die Störung indizierenden ersten Resultatwert ERR liefern. Den störungsbehafteten Referenzbildabschnitten 21 ähnliche Bildabschnitte sollen aufgrund des durchgeführten Optimierungsverfahrens ebenfalls den eine Störung indizierenden Resultatwert ERR liefern.

Durch die Anwendung des K-Nearest-Neighbor-Verfahren als Optimierungsverfahren wird auch für Bildabschnitte der vorgegebenen Größe, die aufgrund ähnlicher Störungen ein ähnliches Aussehen aufweisen wie die störungsbehafteten Referenzbildabschnitte 21, der erste Resultatwert ERR erzielt, der auf eine Störung hinweist. Bei Anwendung der Entscheidungsfunktion f auf einen der störungsfreien Referenzbildabschnitte 31 wird ein vom ersten Resultatwert ERR abweichender zweiter Resultatwert W erzielt. Dieser zweite Resultatwert W wird auch bei der Anwendung der Entscheidungsfunktion f auf Bildabschnitte 11 erreicht, die den störungsfreien Referenzbildabschnitten 31 ähnlich sind und keine Fehler, Bildstörungen oder Artefakte aufweisen.

Nach Abschluss des Kalibrierungsverfahrens wird die Entscheidungsfunktion f dazu herangezogen, Messfehler und Artefakte im Wetterradarbild 1 zu erkennen, wobei die Entscheidungsfunktion f auf einzelne Teilbereiche 11 des Wetterradarbilds 1 angewendet wird. Für jeden der Teilbereiche 11 wird nach Anwendung der Entscheidungsfunktion f der jeweilige Resultatwert W, ERR der Entscheidungsfunktion ermittelt und zur Beurteilung darüber herangezogen, ob im jeweiligen überprüften Teilbereich 11 ein Messfehler oder Artefakt vorliegt.

Im vorliegenden Ausführungsbeispiel wurden sowohl für den ersten Resultatwert ERR als auch für den zweiten Resultatwert W jeweils eine gleiche Anzahl von beispielsweise 250 Referenzbildabschnitten 21, 31 vorgegeben. Diese Referenzbildabschnitte 21, 31 stammen von Aufnahmen, die zu unterschiedlichen Tages- und Jahreszeiten von dem Wetterradar 12 aufgenommen worden sind, das auch das zu untersuchende Wetterradarbild 1 erzeugt. Auf diese Weise kann für jedes Wetterradar 12 spezifisch auf jeweils vorkommende Fehlertypen, gegebenenfalls auch auf Arten von Niederschlagszellen eingegangen werden. Somit können auch Referenzbildabschnitte 21, die im Bereich eines Wetterradars 12 als störungsbehaftet angesehen werden, im Bereich eines anderen Wetterradars 12 durchaus als fehlerfrei angesehen werden.

Insgesamt ist es vorteilhaft, um eine ausreichende Optimierung der Entscheidungsfunktion zu erreichen, Über-Trainingseffekte jedoch zu vermeiden, eine Anzahl von 50 bis 500 Referenzbildabschnitte für jeden Resultatwert vorzugeben. Eine zu kleine Anzahl von vorgegebenen Referenzbildabschnitten führt dazu, dass eine Unterscheidung nicht ausreichend gut vorgenommen werden kann. Die Vorgabe einer zu großen Anzahl führt zu Über-Trainingseffekten und verhindert wiederum eine ausreichend genaue Unterscheidung. Versuche haben gezeigt, dass vorteilhafterweise zwischen 200 und 350 Referenzbildabschnitte für jeden der Resultatwerte optimale Ergebnisse liefern.

Im vorliegenden Ausführungsbeispiel wurden jeweils 250 Referenzbildabschnitte für jeden der Resultatwerte herangezogen.

In dem zu untersuchenden Wetterradarbild 1 wird in eine Anzahl von rasterförmig angeordneten Teilbereichen 11 vorgegeben. Jeder der Teilbereiche 11 ist jeweils einem Bezugspixel 111 eindeutig zugeordnet, das sich im Zentrum des jeweiligen Teilbereichs befindet.

Diese Teilbereiche 11 weisen jeweils dieselbe Größe auf wie die störungsfreien Referenzbildabschnitte 31 und die störungsbehafteten Referenzbildabschnitte 21. Eine solche Aufteilung ermöglicht die Vergleichbarkeit unterschiedlicher Teilbereiche mit derselben Entscheidungsfunktion f. Es besteht die Möglichkeit, dass für jeden der Teilbereiche 11 innerhalb des vorgegebenen Rasters jeweils ein Resultatwert W, ERR ermittelt wird, sodass anschließend festgestellt werden kann, ob innerhalb dieses Teilbereichs 11 eine Störung des Wetterradarbilds 1 vorliegt. Derjenige Teilbereich 11 des Wetterradarbilds 12, für den die Entscheidungsfunktion f einen eine Störung indizierenden ersten Resultatwert ERR liefert, gilt als fehlerhaft. Die Position des aufgefundenen Fehlers wird somit demjenigen Bezugspixel 111 zugeordnet, das im Zentrum des Teilbereichs 11 liegt, für das das jeweilige Ergebnis der Entscheidungsfunktion f dem eine Störung indizierenden ersten Resultatwert ERR entspricht.

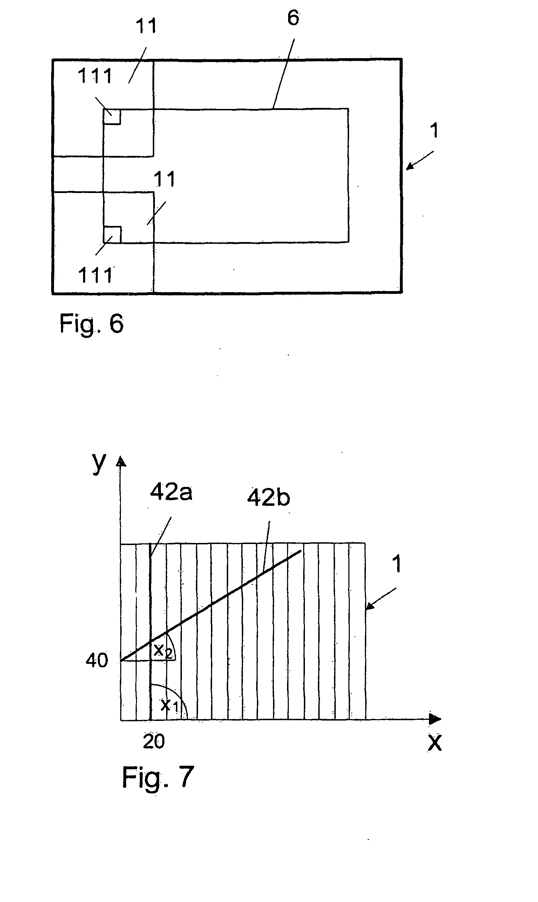

Jedem der Teilbereiche 11 wird ein in seinem Zentrum befindliches Bezugspixel 111 zugeordnet. **(Fig. 6)** Dem jeweiligen Bezugspixel 111 wird der ermittelte Resultatwert $W_1$, ..., $W_{10}$, ERR zugeordnet. Pixel, denen der erste Resultatwert ERR zugeordnet ist, werden als mit Messfehlern oder Artefakten behaftete Pixel 51 ausgewählt oder markiert. Besonders vorteilhaft an dieser Vorgehensweise ist, dass jedes Pixel des Wetterradarbilds 1 als Bezugspixel eines Teilbereichs 11 fungiert. Hierfür können grundsätzlich sämtliche Pixel des Wetterradarbilds herangezogen werden, die sich im Zentrum eines Teilbereichs 11 befinden, der vollständig innerhalb des Wetterradarbilds 1 liegt. Für diejenigen Pixel, die sich im Zentrum eines vollständig im Wetterradarbild 1 gelegenen Teilbereichs 11 befinden, werden die jeweiligen Resultatwerte ermittelt, sodass sich ein Resultatsbild 6, ergibt. Diesem Resultatsbild kann einerseits das Vorliegen eines Fehlers und andererseits die Art von Niederschlagszelle entnommen werden, die sich im unmittelbaren Bereich um das jeweilige Bezugspixel 111 befindet.

Ein zweites Ausführungsbeispiel der Erfindung ermöglicht neben der Unterscheidung zwischen störungsfreien und störungsbehafteten Bildausschnitten eines Wetterradarbilds 1 die Möglichkeit, unterschiedliche Arten von Niederschlagszellen 180 voneinander zu unterscheiden. Hierfür wird eine Vielzahl von weiteren Resultatwerten W1, ..., W10 vorgegeben. Jeder Resultatwert W1 bis W10 entspricht jeweils einer Art von Niederschlagszelle.

Im Folgenden wird auch der Umstand, dass der jeweilige Teilbereich 11 frei von Radarechos ist als weitere "Art von Niederschlagszelle 180" betrachtet. Einer der Resultatwerte W1 ... W10 wird diesem Umstand zugeordnet.

Im Zuge des Optimierungsverfahrens wird im Gegensatz zum vorgenannten ersten Ausführungsbeispiel sichergestellt, dass für jede einzelne Art W1, ..., W10 von Niederschlagszelle 180 jeweils eine Anzahl von 50 bis 500, insbesondere 250 bis 350, Referenzbildabschnitten 21, 31 zur Verfügung gestellt werden.

Im Zuge des Optimierungsverfahrens wird eine Entscheidungsfunktion f erstellt, die bei Anwendung auf einen der störungsfreien Referenzbildabschnitte 31 einen Resultatwert W1, ..., W10 liefert, welcher der jeweiligen Art von Niederschlagszelle entspricht. Wird die Entscheidungsfunktion f auf einen störungsbehafteten Referenzbildabschnitt 21 angewendet, liefert sie den ersten, eine Störung indizierenden Ergebniswert ERR.

Die Entscheidungsfunktion f wird im Zuge des Optimierungsverfahrens auf störungsfreie Referenzbildabschnitte 31 angewendet, die jeweils einer der Arten von Niederschlagszellen zugeordnet sind. Die Optimierung der Entscheidungsfunktion f erfolgt nun dahingehend, dass diese bei einer Niederschlagszelle 180 einer bestimmten Art einer der jeweiligen Art entsprechenden Resultatwert W1, ..., W10 liefert.

Alternativ kann auch eine Vielzahl von Entscheidungsfunktionen f' durch Optimierung erstellt werden, wobei jede der Entscheidungsfunktionen f' die Wahrscheinlichkeit dafür angibt, dass der im Teilbereich 11 befindliche Bildabschnitt einer bestimmten Art von Niederschlagszelle entspricht. Es wird eine weitere Entscheidungsfunktion f'' ermittelt, die angibt, wie wahrscheinlich das Auftreten eines Artefakts oder Messfehlers im jeweiligen Teilbereich 11 ist.

Sämtliche der für die Ermittlung der Wahrscheinlichkeit des Auftretens einer bestimmten Art von Niederschlag gebildeten Entscheidungsfunktionen f', f'' liefern bei Anwendung auf einen störungsfreien Referenzbildabschnitt 31 der ihnen zugeordneten Art von Niederschlagszelle 180 einen sehr hohen Wert, von insbesondere 100 %, und bei Vorliegen eines fehlerbehafteten Referenzbildabschnitts 21 sowie eines störungsfreien Referenzbildabschnitts 31 mit einer Niederschlagszelle 180 einer anderen Art einen sehr geringen Wert von insbesondere 0 %.

Die Entscheidungsfunktion zur Detektion von Störungen oder Artefakten liefert bei Vorliegen eines störungsfreien Referenzbildabschnitts 31 einen sehr geringen Wert, insbesondere 0%, und bei Vorliegen eines störungsbehafteten Referenzbildabschnitts 21 einen großen Wert, insbesondere 100 %. Die einzelnen von den Entscheidungsfunktionen f', f'' bei Anwendung auf den jeweiligen Teilbereich 11 ermittelten Resultatwerte werden miteinander verglichen, wobei die Entscheidungsfunktion f', f'' mit dem größten Resultatwert gesucht wird. Diejenige Entscheidungsfunktion f' wird ausgewählt, die den größten Resultatwert liefert. Liefert die Entscheidungsfunktion f'' für störungsbehaftete Teilbereiche den größten Wert, so wird dieser Teilbereich 11 als störungsbehaftet angesehen. Andernfalls wird diesem Teilbereich 11 eine Art von Niederschlagszelle 180 zugeordnet, der derjenigen Entscheidungsfunktion f' für die jeweiligen Art von Niederschlagszelle 180 entspricht, die den größten Resultatwert liefert.

Ein drittes Ausführungsbeispiel der Erfindung sieht eine geometrische Klassifikation von Artefakten in Wetterradarbildern 1 vor. In einem ersten Schritt wird eine Anzahl von unterschiedlichen geometrischen Objekten 41, 42 in Bezug auf das Wetterradarbild 1 vorgegeben. Bei diesen Objekten 41, 42 handelt es sich im vorliegenden Ausführungsbeispiel um Geraden 42 **(Fig. 7)**. Jede Gerade 42 kann mittels zweier Parameter X, Y bestimmt werden. Die Geraden 42 verlaufen mit einer vorgegebenen Steigung bzw. mit einem vorgegebenen Winkel durch das Wetterradarbild 1, wobei die Steigung bzw. der vorgegebene Winkel einen ersten Parameter X darstellt. Der zweite Parameter Y wird durch die Koordinatendifferenz des Randpunkts ermittelt, an dem die jeweilige Gerade 42 den linken oder unteren Rand des Wetterradarbilds 1 schneidet. Bei der in **Fig. 7** dargestellten Geraden 42a wird als erster Parameter X der Winkel ermittelt, den die Gerade mit der x-Achse des Wetterradarbilds 1 einschließt. Man erhält hierbei einen Winkel von $X_1 = 90\,°$. Analog erhält man für die zweite in **Fig. 7** dargestellte Gerade 42b den ersten Parameter durch Bestimmung des Winkels, den die zweite Gerade 42b mit der x-Achse einschließt, nämlich $X_2 = 60\,°$.

Eine erste in **Fig. 6** dargestellte Gerade 42a schneidet den unteren Bildrand des Wetterradarbilds 1 bei einer Pixelkoordinate x = 20, y = 0. Es ergibt sich folglich als zweiter Parameter Y = x-y = 20-0 = 20. Eine zweite in **Fig. 6** dargestellte Gerade 42b schneidet den linken Bildrand des Wetterradarbilds bei einer Pixelkoordinaten x = 0, y = 40. Es ergibt sich folglich als zweiter Parameter Y = x-y = 0-40 = -40.

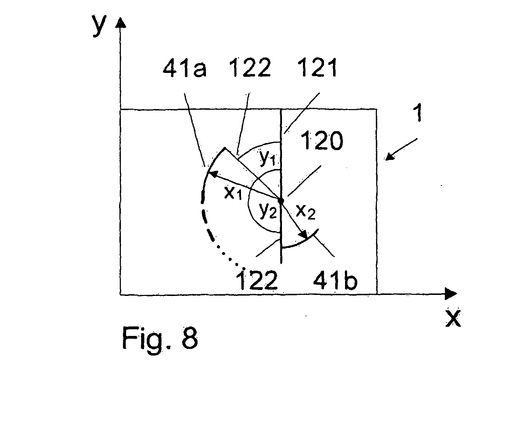

In einer alternativen Ausführungsform können auch Kreisbogenabschnitte 41 als geometrische Objekte für die Hough-Transformation verwendet werden, wie in **Fig. 8** dargestellt. In diesem Fall stellt das Pixel 120 des Wetterradarbilds 1, das dem Teilgebiet 110 zugeordnet ist, in dem sich das Wetterradar 12 befindet, ferner den Kreismittelpunkt der Kreisbogenabschnitte 41 dar. Der erste Parameter X wird in diesem Ausführungsbeispiel durch den Radius bzw. durch den Abstand der dem Kreisbogenabschnitt 41 zugehörigen Punkte zu dem Pixel 120 des Wetterradarbilds 1, das dem Teilgebiet 110 zugeordnet ist, in dem sich das Wetterradar 12 befindet, festgelegt. Der erste Parameter X des ersten Kreisbogenabschnitts 41 a wird somit, wie in **Fig. 8** dargestellt, mit $X_1 = 50$ festgelegt. Der erste Parameter X des zweiten Kreisbogenabschnitts 41 a wird somit mit $X_2 = 20$ festgelegt **(Fig. 8)**.

Der zweite Parameter Y der Kreisbogenabschnitte 41 wird durch den minimalen Winkel zwischen zwei Geraden 121, 122, gemessen im Uhrzeigersinn, angegeben, wobei die erste Gerade 121 vom Mittelpunkt 120 des Kreises nach oben verläuft und die zweite Gerade 122 durch den Mittelpunkt des Kreises und durch einen Punkt auf dem Kreisbogenabschnitt 41 a, 41 b verläuft.

Sämtliche Kreisbogenabschnitte 41 haben in diesem bevorzugten Ausführungsbeispiel dieselbe Ausdehnung in Umfangsrichtung von 20°. Der erste Kreisbogenabschnitt 41a hat als zweiten Parameter $Y_1 = 50°$, der zweite Kreisbogenabschnitt 41b hat als zweiten Parameter $Y_2 = 180°$.

In einer weiteren alternativen Ausführungsform der Erfindung werden als geometrische Objekte anstelle von Kreisbögen Ellipsen verwendet, deren Brennpunkt oder Mittelpunkt in demjenigen Pixel 120 liegt, das dem Teilgebiet 110 zugeordnet, in dem sich das Wetterradar 12 befindet.

Im vorliegenden Ausführungsbeispiel wird das Wetterradarbild einer Hough-Transformation unterzogen, wobei jedes Pixel 45 des Hough-Transformationsbilds 4, jeweils einem der geometrischen Objekte 41, 42 entspricht. Im Zuge der Hough-Transformation werden die einzelnen Pixel-Werte H(X, Y) des Hough-Transformationsbilds 4 mittels folgender Formel ausgewertet:

$$H(X,\ Y) = SUM_{G(X,\ Y)}\ h(x,\ y)$$

Hierbei entspricht das Summationsgebiet G(X, Y) denjenigen Pixeln, die innerhalb des jeweiligen geometrischen Objekts 41, 42 liegen, h(x, y) entspricht dem jeweiligen dem Pixel mit den Koordinaten x, y zugeordneten Wert.

Die einzelnen Werte des Hough-Transformationsbilds 4 werden mit einem Schwellenwert S verglichen. Dieser Schwellenwert kann vorteilhafterweise auf z.B. 10% desjenigen Werts gesetzt werden, der erzielt wird, wenn sämtliche Pixel 11 des Wetterradarbilds 1 innerhalb des jeweiligen Objekts 41, 42 den maximalen Intensitätswert aufweisen.

Alternativ kann auch vorgesehen sein, dass als Schwellenwert S ein Wert von 60% bis 90% des maximalen Pixelwerts innerhalb des Hough-Transformationsbilds 4 herangezogen wird. Wird der jeweilige Schwellenwert überschritten, so wird angenommen, dass die Pixel 11 des Wetterradarbilds 1 innerhalb des jeweiligen geometrischen Objekts 41, 42 allesamt einen fehlerhaften Wert aufweisen. Die Pixel, die dem jeweiligen geometrischen Objekt 41, 42 zugehören, werden ausgewählt bzw. als fehlerhaft markiert.

Ganz allgemein können anstelle der beiden vorgeschlagenen Arten von geometrischen Objekten 41, 42 nämlich Geraden 42 und Kreisbogenelementen 41, weitere geometrische Objekte 41, 42 verwendet werden, beispielsweise etwa Ellipsen 43, deren Mittelpunkt oder Brennpunkt mit der Lage des Wetterradars im Wetterdarbild 1 übereinstimmt.

Ein weiteres Ausführungsbeispiel der Erfindung ermöglicht eine verbesserte Detektion von Messfehlern und Artefakten. In diesem Ausführungsbeispiel werden das Verfahren wie im ersten oder zweiten Ausführungsbeispiel dargestellt, einerseits, sowie ein Verfahren wie im dritten Ausführungsbeispiel der Erfindung dargestellt, andererseits, durchgeführt. Sofern die Ausführungsbeispiele der Erfindung zuverlässig funktionieren, liefern beide Vorgehensweisen bzw. die erläuterten Arten der dargestellten Ausführungsbeispiele dieselben Ergebnisse. Bei fehlerhaften oder nicht eindeutigen Messdaten kann jedoch der Fall eintreten, dass die beiden Verfahren jeweils unterschiedliche Messergebnisse liefern.

Für beide voranstehend genannten Ausführungsbeispiele der Erfindung kann jeweils ein Resultatsbild 6 ermittelt werden, wobei für jedes der Pixel ein Resultatwert zur Verfügung steht, dem entnommen werden kann, ob das Pixel als fehlerhaftes oder fehlerbehaftetes Pixel ausgewählt worden ist, oder nicht.

Stimmen für ein Pixel die Resultatwerte, die gemäß dem ersten oder zweiten Ausführungsbeispiel erzielt worden sind, nicht mit dem Resultatwert, der mit dem dritten dargestellten Ausführungsbeispiel der Erfindung ermittelt worden ist, überein, so kann das im Folgenden dargestellte Vorgehen zu einer verbesserten Entscheidung darüber führen, ob ein Artefakt vorliegt und somit das jeweilige Pixel als fehlerhaft angesehen werden soll.

Als einfachste Entscheidung kann vorgesehen sein, dass ein Pixel nur dann als fehlerhaft angesehen wird, wenn beide Verfahren das Pixel als fehlerhaft angesehen haben. Liefern die beiden voranstehend genannten Verfahren unterschiedliche Resultate, so gilt das jeweilige Pixel nicht als fehlerhaft.

Mit einer rigorosen Herangehensweise können fehlerhafte Pixel bereits dann als fehlerhaft angesehen werden, wenn lediglich eines der beiden voranstehend genannten Verfahren einen Fehler indizierenden Wert liefert.

Beide Vorgehen neigen dazu, falschpositive oder falschnegative Prüfresultate zu liefern.

Zur weiteren Verbesserung des Verfahrens kann vorgesehen sein, dass bei widersprüchlichen Ergebnissen der beiden voranstehend genannten Verfahren ein zusätzliches Entscheidungsverfahren durchgeführt wird. Zu diesem Zweck wird eine Anzahl von der Aufnahme des jeweiligen Wetterradarbilds 1 unmittelbar vorangehend mit demselben Wetterradar 12 aufgenommenen weiteren Wetterradarbildern 1' herangezogen. Diese Wetterradarbilder 1' werden etwa im Abstand von 2,5 bis 5 Minuten aufgezeichnet. Das Vorliegen eines Messfehlers oder Artefakts wird dann bestätigt, wenn der Resultatwert $W_1, ..., W_{10}$, ERR für das jeweilige Pixel in den weiteren, unmittelbar vorangehend aufgenommenen Wetterradarbildern 1' nicht identisch ist. Mit diesem Vorgehen wir dem Umstand Rechnung getragen, dass Artefakte typischerweise plötzlich auftreten und verschwinden und insbesondere nur in einem einzigen Wetterradarbild 1 auftreten. Die Anzahl der zusätzlich herangezogenen, unmittelbar vorangehend aufgenommenen Wetterradarbilder 1' wird vorteilhafter Weise mit 2 festgelegt.

Tritt ein Resultatwert $W_1, ..., W_{10}$, ERR lediglich ein einziges Mal auf bzw. wechselt der Resultatwert $W_1, ..., W_{10}$, ERR einmal oder sogar öfters bei den unmittelbar vorangehend aufgenommenen Wetterradarbildern 1', so kann davon ausgegangen werden, dass diese Änderung durch ein Messartefakt bedingt ist und nicht von tatsächlichen Wetterphänomenen herrührt. In einem derartigen Fall kann das Vorliegen eines Messfehlers oder Artefakts für das jeweilige Pixel 11 bestätigt werden.

**Patentansprüche**

1. Verfahren zur Detektion von Messfehlern oder Artefakten in einem mittels eines Wetterradars (12) aufgenommenen Wetterradarbildes (1), wobei

    a) das Wetterradarbild (1) in Form eines zweidimensionalen Digitalbildes vorliegt, wobei jedes Pixel (15) des Wetterradarbildes (1) jeweils einem Teilgebiet (150) des mit dem Wetterradar (12) überwachten Gebiets (14) zugeordnet wird, und
    b) jedem Pixel (15) ein Reflektivitätswert zugeordnet wird und jeder Reftektivitätswert (I1, ...) der mit dem Wetterradar (12) ermittelten elektromagnetischen Reflektivität der Luftschichten im Bereich des dem jeweiligen Pixel (15) zugeordneten Teilgebiets (150) entspricht,

    **dadurch gekennzeichnet, dass**
    vorab in einem Kalibrierverfahren

    c) eine Anzahl von störungsbehafteten Referenzwetterradarbildern (2) herangezogen wird, aus denen vorab störungsbehaftete Referenzbildabschnitte (21) einer vorgegebenen Größe ausgewählt werden, die Störungen aufweisen,
    d) eine Anzahl von weiteren Referenzwetterradarbildern (3) herangezogen wird, aus denen störungsfreie Referenzbildabschnitte (31) der vorgegebenen Größe ausgewählt werden,
    e) die störungsbehafteten Referenzbildabschnitte (21) und die störungsfreien Referenzbildabschnitte (31) einem Optimierungsverfahren zugrundegelegt werden, wobei im Zuge des Optimierungsverfahrens eine Entscheidungsfunktion ermittelt wird, die als Argument einen Bildabschnitt der vorgegebenen Größe erhält und als Ergebnis einen aus zumindest zwei voneinander unterschiedlichen Resultatwerten (W, ERR) liefert,
    f) wobei im Zuge des Optimierungsverfahrens eine Optimierung dahingehend durchgeführt wird, dass die Entscheidungsfunktion bei Anwendung auf einen der störungsbehafteten Referenzbildabschnitte (21) einen eine Störung indizierenden ersten Resultatwert (ERR) liefert und bei Anwendung auf einen der störungsfreien Referenzbildabschnitte (31) einen vom ersten Resultatwert (ERR) abweichenden zweiten Resultatwert (W) liefert, und anschließend zur Detektion von Messfehlern und Artefakten im Wetterradarbild (1)
    g) die Entscheidungsfunktion auf einen Teilbereich (11) oder mehrere Teilbereiche (11) des Wetterradarbildes (1) angewendet wird und der jeweilige Resultatwert (W, ERR) der Entscheidungsfunktion zur Beurteilung herangezogen wird, ob im betreffenden überprüften Teilbereich (11) des Wetterradarbildes (1) ein Messfehler oder Artefakt vorliegt.

2. Verfahren nach Anspruch 1, **dadurch gekennzeichnet, dass** die Position oder das Auftreten eines aufgefundenen Fehlers oder Artefakts demjenigen Teilgebiet (16) zugeordnet wird, das einem Teilbereich (11) des Wetterradarbildes (1) zugeordnet ist, für das das jeweilige Ergebnis der Entscheidungsfunktion dem eine Störung indizierenden ersten Resultatwert (ERR) entspricht.

3. Verfahren nach einem der vorangehenden Ansprüche, **dadurch gekennzeichnet, dass** eine Anzahl von Teilbereichen (11) des Wetterradarbilds (1) vorgegeben wird, die jeweils die vorgegebene Größe aufweisen.

4. Verfahren nach einem der vorangehenden Ansprüche, **dadurch gekennzeichnet, dass** eine Vielzahl von zweiten Resultatwerten (W1, ..., W10) vorgegeben wird, wobei für jeden zweiten Resultatwert (W1, ..., W10) jeweils eine Anzahl von störungsfreien Referenzbildabschnitten (31) vorgegeben wird, in deren zugeordnetem Gebiet jeweils dieselbe Art von Niederschlagszellen vorherrscht,
wobei im Zuge des Optimierungsverfahrens eine Optimierung dahingehend durchgeführt wird, dass die Entscheidungsfunktion bei Anwendung auf einen der störungsbehafteten Referenzbildabschnitte (21) einen eine Störung indizierenden ersten Resultatwert (ERR) liefert und bei Anwendung auf einen der störungsfreien Referenzbildabschnitte (31) einen der zweiten Resultatwerte (W1, ..., W10) liefert, und die Entscheidungsfunktion auf einen Teilbereich (11) oder mehrere Teilbereiche (11) des Wetterradarbildes (1) angewendet wird und der jeweilige Resultatwert (W1, ..., W10, ERR) der Entscheidungsfunktion zur Beurteilung herangezogen wird, ob im betreffenden Teilbereich (11) des Wetterradarbildes (1) ein Messfehler oder Artefakt oder eine der vorgegebenen Arten von Niederschlagszellen vorliegt.

5. Verfahren nach einem der vorangehenden Ansprüche, **dadurch gekennzeichnet, dass** als Optimierungsverfahren ein K-Nearest-Neighbor-Verfahren herangezogen wird.

6. Verfahren nach einem der vorangehenden Ansprüche, **dadurch gekennzeichnet, dass** für jeden Resultatwert (W, ERR) und/oder für jeden einer Art von Niederschlagszelle zugeordneten zweiten Resultatwert (W1, ..., W10) jeweils eine Anzahl von 50 bis 500, insbesondere 200 bis 350, Referenzbildabschnitten (21, 31) vorgegeben wird.

7. Verfahren nach einem der vorangehenden Ansprüche, **dadurch gekennzeichnet, dass** die aus den Wetterradarbildern (1) entnommenen Teilbereiche, die störungsbehafteten Referenzbildabschnitte (21) sowie die störungsfreien Referenzbildabschnitte (31) rechteckige oder quadratische Form mit einer Kantenlänge zwischen 30 und 150 Pixel aufweisen.

8. Verfahren nach einem der vorangehenden Ansprüche, **dadurch gekennzeichnet, dass** jedem der Teilbereiche (11) ein, insbesondere in seinem Zentrum befindliches, Bezugspixel (111) zugeordnet wird und dass diesem Bezugspixel (111) der jeweilige Resultatwert (W1, ..., W10, ERR) zugeordnet wird, und dass Pixel (11), denen der erste Resultatwert (ERR) zugeordnet ist, als mit Messfehlern oder Artefakten behaftete fehlerhafte Pixel (51) ausgewählt und/oder markiert werden.

9. Verfahren zur Detektion von Messfehlern oder Artefakten in einem mittels eines Wetterradars (12) aufgenommenen Wetterradarbildes (1), nach einem der vorangehenden Ansprüche, wobei

a) das Wetterradarbild (1) in Form eines zweidimensionalen Digitalbildes vorliegt, wobei jedes Pixel (15) des Wetterradarbildes (1) jeweils einem Teilgebiet (150) des mit dem Wetterradar (12) überwachten Gebiets (14) zugeordnet wird,
b) jedem Pixel (15) ein Reflektivitätswert zugeordnet wird und jeder Reflektivitätswert (I1, ...) der mit dem Wetterradar (12) ermittelten elektromagnetischen Reflektivität der Luftschichten im Bereich des dem jeweiligen Pixel (15) zugeordneten Teilgebiets (150) entspricht,

**dadurch gekennzeichnet, dass**

a) eine Anzahl von geometrischen Objekten (41, 42) in Bezug auf das Wetterradarbild (1) vorgegeben wird,
b) basierend auf den vorgegebenen geometrischen Objekten (41, 42, 43) eine Hough-Transformation durchgeführt wird, wodurch ein Hough-Transformationsbild (4) erstellt wird, wobei jedem der vorgegebenen geometrischen Objekte (41, 42, 43) jeweils ein Pixel (45) des Hough-Transformationsbilds (4) zugeordnet wird,
c) dass diejenigen Pixel (45) des Hough-Transformationsbilds (4) ausgewählt werden, deren Wert einen vorgegebenen oder einen anhand des Hough-Transformationsbilds (4) ermittelten Schwellenwert (S) überschreitet, und
d) dass diejenigen vorgegebenen geometrischen Objekte (41, 42, 43), die einem der ausgewählten Pixel (45) des Hough-Transformationsbilds (4) zugeordnet sind ermittelt werden, und dass Pixel (11) innerhalb dieser geometrischen Objekte (41, 42, 43) als mit Messfehlern oder Artefakten behaftete fehlerhafte Pixel (51) ausgewählt und/oder markiert werden.

10. Verfahren nach Anspruch 9, **dadurch gekennzeichnet, dass** das Hough-Transformationsbild (4) zweidimensional ist, wobei jedem der Pixel (45) des Hough-Transformationsbilds (4) jeweils ein im Wetterradarbild (1) verlaufendes, mit jeweils zwei Parametern (X, Y) parametrisiertes geometrisches Objekt (41, 42, 43) zugeordnet ist, wobei die beiden Koordinaten (X, Y) des jeweiligen Pixels des Hough-Transformationsbilds (4) jeweils mit einem der Parameter (X, Y) übereinstimmen.

11. Verfahren nach Anspruch 10 oder 11, **dadurch gekennzeichnet, dass** als geometrische Objekte (41, 42, 43) Kreisbögen herangezogen werden, wobei die Kreisbögen (41) einen vorgegebenen gemeinsamen Mittelpunkt aufweisen, der mit der Lage des Wetterradars (12) im Wetterradarbild (1) übereinstimmt, wobei als Parameter (x, y) der Radius des Kreisbogens (41) sowie ein vorgegebener Winkelbereich und/oder Abschnitt herangezogen wird, wobei der jeweilige Kreisbogen (41) vorzugsweise in eine Anzahl von einander nicht überlappenden Abschnitten unterteilt wird, dessen jeweiliger Winkelbereich in Bezug auf den Kreismittelpunkt jeweils einem Parameterwert entspricht.

12. Verfahren nach Anspruch 10, **dadurch gekennzeichnet, dass** als geometrische Objekte Geraden (42) herangezogen werden, wobei als Parameter (X, Y) die Verlaufsrichtung der Geraden (22) sowie die Koordinatendifferenz eines der Randpunkte, vorteilhafterweise im linken oder unteren Rand, des Wetterradarbilds (1) herangezogen wird, durch den die Gerade verläuft.

13. Verfahren nach einem der Ansprüche 10 bis 12, **dadurch gekennzeichnet, dass** als geometrische Objekte Umfangslinien von Ellipsen (43) verwendet werden, deren Mittelpunkt oder Brennpunkt mit der Lage des Wetterradars (12) im Wetterradarbild (1) übereinstimmt, wobei als Parameter (X, Y) die Längen der beiden Halbachsen vorgegeben werden.

14. Verfahren nach einem der Ansprüche 9 bis 13, **dadurch gekennzeichnet, dass** als Schwellenwert (S) ein Wert von 60% bis 90% des maximalen Pixelwerts innerhalb des Hough-Transformationsbilds (4) herangezogen wird.

15. Verfahren nach einem der vorangehenden Ansprüche, **dadurch gekennzeichnet,**

a) **dass** das Wetterradarbild (1) mit dem Verfahren nach Anspruch 8 auf Messfehler oder Artefakte untersucht wird und ein Fehlerbild (5) erstellt wird,
b) **dass** Wetterradarbild (1) mit dem Verfahren nach einem der Ansprüche 9 bis 14 auf Messfehler oder Artefakte untersucht wird, und
c) **dass** ein Pixel (11) dann als fehlerhaftes Pixel (51) ausgewählt und/oder markiert wird, wenn es zumindest nach einem der beiden vorangegangenen Schritte a) oder b), insbesondere nach beiden Schritten a) und b) als fehlerhaftes Pixel (51) ausgewählt und/oder markiert worden ist.

16. Verfahren nach Anspruch 15, **dadurch gekennzeichnet, dass** für den Fall, dass ein Pixel (11) nur in einem der beiden Schritte a) und b) des Anspruchs 15 als fehlerhaftes Pixel (51) erkannt und/oder markiert worden ist, eine Anzahl von, insbesondere zwei, der Aufnahme des jeweiligen Wetterradarbilds (1) unmittelbar vorangehend mit demselben Wetterradar (12) aufgenommenen weiteren Wetterradarbildern (1') herangezogen wird, wobei das Vorliegen eines Messfehlers oder Artefakts dann bestätigt wird, wenn der Resultatwert (W1, ..., W10, ERR) für das jeweilige Pixel (11) in den unmittelbar vorangehend aufgenommenen, weiteren Wetterradarbildern (1') nicht identsch ist.

17. Verfahren nach einem der vorangehenden Ansprüche, insbesondere nach Anspruch 16, **dadurch gekennzeichnet, dass** zwischen den beiden Aufnahmezeitpunkten der Wetterradarbilder (1) zumindest 2,5 Minuten, insbesondere 2,5 Minuten oder 5 Minuten, liegen.

18. Datenträger, auf dem ein Computerprogramm zur Durchführung des Verfahrens gemäß einem der vorangehenden Ansprüche abgespeichert ist.

19. Computerprogramm zur Durchführung des Verfahrens nach einem der vorangehenden Ansprüche 1 bis 17.

**Claims**

1. A method for the detection of measurement errors or artifacts in a weather radar image (1) captured by means of weather radar (12), whereby

a) the weather radar image (1) is in the form of a two-dimensional digital image, whereby each pixel (15) of the weather radar image (1) is assigned to a sub-area (150) of the area (14) monitored by the weather radar (12), and
b) each pixel (15) is assigned a reflectivity value, whereby each reflectivity value (11, ...) corresponds to the electromagnetic reflectivity of the layers of air detected by the weather radar (12) in the region of the sub-area (150) assigned to each pixel (15),

**characterised in that**
in a prior calibration method

c) a number of error-prone reference weather radar images (2) are examined, and error-prone reference image sections (21) of a predetermined size showing errors are selected in advance from among them,
d) a number of further reference weather radar images (3) are examined, and error-free reference image sections (31) of the predetermined size are selected from among them,
e) the error-prone reference image sections (21) and the error-free reference image sections (31) are subject to an optimisation process, whereby a decision function is determined in the course of the optimisation process, and receives an image section of predetermined size as an argument in order to provide one of at least two different result values (W, ERR) as a result,
f) whereby, in the course of the optimisation process, optimisation is performed so that the decision function, when applied to one of the error-prone reference image sections (21), provides a first error-indicating result value (ERR), while, when applied to one of the error-free reference image sections (31), it provides a second result value (W) deviating from the first result value (ERR), which is then used for the detection of measurement errors and artifacts in the weather radar image (1),
g) the decision function is applied to a sub-area (11) or multiple sub-areas (11) of the weather radar image (1) and the respective result value (W, ERR) of the decision function is used to assess whether a measurement error or artifact exists in the relevant examined sub-area (11) of the weather radar image (1).

2. Method according to claim 1, **characterised in that** the position or the occurrence of an identified error or artifact is assigned to the sub-area (16), whereby the sub-area (11) of the weather radar image (1) is assigned, and whereby the respective result of the decision function corresponds to the error-indicating first result value (ERR).

3. Method according to any one of the preceding claims, **characterised in that** a number of sub-areas (11) of the weather radar image (1) is predetermined, whereby each has the predetermined size.

4. Method according to any one of the preceding claims, **characterised in that** a plurality of second result values (W1, ..., W10) is predetermined, whereby, in each case for each second result value (W1, ..., W10), a number of error-free reference image sections (31) are predetermined, whereby the same kind of precipitation cells are respectively predominant in their assigned area,
whereby, in the course of the optimisation process, optimisation is performed so that the decision function, when applied to one of the error-prone reference image sections (21), provides a first error-indicating result value (ERR), while, when applied to one of the error-free reference image sections (31), it provides a second result value ( W1, ..., W10), and whereby the decision function is applied to a sub-area (11) or multiple sub-areas (11) of the weather radar image (1), and the respective result value (W1, ..., W10, ERR) of the decision function is used to assess whether there is a measurement error or artifact or one of the prescribed types of precipitation cells in the relevant sub-area (11) of the weather radar image (1).

5. Method according to any one of the preceding claims, **characterised in that** a K-nearest neighbour method is used as the optimisation method,.

6. Method according to one of the preceding claims, **characterised in that** for each result value (W, ERR) and/or for each second result value (W1, ..., W10) assigned to each kind of precipitation cell, a number of reference image sections (21, 31) from 50 to 500, in particular from 200 to 350, are predetermined.

7. Method according to one of the preceding claims, **characterised in that** the sub-areas extracted from the weather radar images (1), the error-prone reference image sections (21), as well as the error-free reference image sections (31), all have a rectangular or square shape with an edge length between 30 and 150 pixels.

8. Method according to any one of the preceding claims, **characterised in that** each of the sub-areas (11) is assigned a reference pixel (111), particularly at its centre, and that this reference pixel (111) is assigned to the respective result value (W1, ..., W10 , ERR), and that the pixel (11), which is assigned to the first result value (ERR), is selected and/or marked as pixels (51) prone to measurement errors or artifacts.

9. Method for the detection of measurement errors or artifacts in a weather radar image (1) captured by means of a weather radar (12) according to any one of the preceding claims, whereby

a) the weather radar image (1) is in the form of a two-dimensional digital image, whereby each pixel (15) of the weather radar image (1) is assigned to one sub-area (150) of the area (14) monitored by the weather radar (12),

b) each pixel (15) is assigned a reflectivity value, whereby each reflectivity value (I1, ...) corresponds to the electromagnetic reflectivity of the layers of air detected by the weather radar (12) in the area of the sub-area (150) assigned to each pixel (15),

**characterised in that**

a) a number of geometric objects (41, 42) is predetermined with respect to the weather radar image (1),

b) based on the predetermined geometric objects (41, 42, 43), a Hough transformation is carried out in order to create a Hough transformation image (4), whereby each of the predetermined geometric objects (41, 42, 43) is assigned one pixel (45) of the Hough transformation image (4),

c) pixels (45) of the Hough transformation image (4) are selected having a value which exceeds a predetermined or threshold value (S) determined by means of the Hough transformation image (4), and

d) predetermined geometric objects (41, 42, 43) that are assigned to one of the selected pixels (45) of the Hough transformation image (4) are identified, and pixels (11) within these geometric objects (41, 42, 43) selected and/or marked as being pixels (51) prone to errors or artifacts.

10. Method according to claim 9, **characterised in that** the Hough transformation image (4) is two-dimensional, whereby each of the pixels (45) of the Hough transformation image (4) is assigned to each parameterised geometric object (41, 42, 43), respectively with two parameters (X, Y) extending in the weather radar image (1), whereby the two coordinates (X, Y) of each pixel of the Hough transformations image (4) coincide respectively with one of the parameters (X, Y).

11. Method according to claim 10 or 11, **characterised in that** circular arcs are used as geometrical objects (41, 42, 43), whereby the arcs (41) have a predetermined common centre matching the position of the weather radar (12) in the weather radar image (1), whereby the radius of the circular arc (41) as well as a predetermined angle range and/or section is used as the parameter (x, y), whereby the respective circular arc (41) is preferably divided into a number of mutually non-overlapping sections, whereby each respective angle range has a parameter value corresponding to the centre of the circle.

12. Method according to claim 10, **characterised in that** straight lines (42) are used as geometric objects, whereby, the orientation of the straight line (22) as well as the coordinate difference of one of the edge points, advantageously pass at the left or bottom edge of the weather radar image (1) through which the line passes, and are used as the parameters (X, Y).

13. Method according to any one of the claims 10 to 12, **characterized in that** circumferential lines of ellipses (43) are used as the geometrical objects, whereby their centre point or focal point coincides with the position of the weather radar (12) in the weather radar image (1), whereby the lengths of the two semi-axes are predetermined as the parameters (X, Y).

14. Method according to any one of the claims 9 to 13, **characterised in that** the threshold value (S) has a value of 60% to 90% of the maximum pixel value within the Hough transformation image (4).

15. Method according to any one of the preceding claims, **characterized in that**

a) the weather radar image (1) is examined for measurement errors or artifacts using the method of claim 8 in order to create an error image (5),

b) the weather radar image (1) is examined for measurement errors or artifacts with the method according to one of the claims 9 to 14, and

c) a pixel (11) is then selected and/or marked as the error-prone pixel (51) especially if an error-prone pixel (51) has been selected and/or marked according to one of the two preceding steps a) or b), in particular according to both steps a) and b).

16. Method according to claim 15, **characterised in that** in the event that a pixel (11) has been identified and/or has been selected as an error-prone pixel (51) in only one of the two steps a) or b) of claim 15, then a number, in particular two, additional immediately-preceding weather radar images (1') is/are captured by the same weather radar (12) having captured the weather radar images (1), whereby the presence of a measurement error or artifact is then confirmed when the result value (W 1, ..., W 10, ERR) for each pixel (11) is not identical in the additional immediately-preceding weather radar images (1').

17. Method according to any one of the preceding claims, in particular according to claim 16, **characterised in that** there is an interval of at least 2.5 minutes, preferably 2.5 minutes or 5 minutes, between the two capture points in time of the weather radar images (1).

18. Data medium on which is stored a computer programme for carrying out the method according to one of the preceding claims.

19. Computer programme for performing the method according to any one of the preceding claims 1 to 17.

**Revendications**

1. Procédé pour la détection d'erreurs de mesure ou d'artéfacts dans une image radar météorologique (1) enregistrée au moyen d'un radar météorologique (12), dans lequel

   a) l'image radar météorologique (1) est disponible sous la forme d'une image numérique bidimensionnelle, chaque pixel (15) de l'image radar météorologique (1) étant associé respectivement à une sous-région (150) de la région (14) surveillée par le radar météorologique (12), et
   b) une valeur de réflectivité est associée à chaque pixel (15) et chaque valeur de réflectivité (l1,...) correspond à la réflectivité électromagnétique, déterminée avec le radar météorologique (12), des couches d'air dans la zone de la sous-région (150) associée au pixel (15) respectif,

   **caractérisé en ce que**
   au préalable, dans un procédé d'étalonnage

   c) un nombre d'images radar météorologiques de référence (2) perturbées est considéré, parmi celles-ci sont sélectionnées au préalable des sous-images de référence (21) perturbées d'une grandeur prédéfinie, qui comportent des perturbations,
   d) un nombre d'images radar météorologiques de référence (3) supplémentaires est considéré, parmi celles-ci sont sélectionnées des sous-images de référence (31) non perturbées de la grandeur prédéfinie,
   e) les sous-images de référence (21) perturbées et les sous-images de référence (31) non perturbées sont prises pour base d'un procédé d'optimisation, une fonction de décision étant déterminée au cours du procédé d'optimisation, laquelle reçoit comme argument une sous-image de la grandeur prédéfinie et fournit comme résultat l'une d'au moins deux valeurs de résultat (W, ERR) différentes l'une de l'autre,
   f) une optimisation étant effectuée au cours du procédé d'optimisation, de telle sorte que la fonction de décision fournit, en cas d'application à l'une des sous-images de référence (21) perturbées, une première valeur de résultat (ERR) indiquant une perturbation et, en cas d'application à l'une des sous-images de référence (31) non perturbées, une deuxième valeur de résultat (W) différente de la première valeur de résultat (ERR), et

   ensuite, pour la détection des erreurs de mesure et des artéfacts dans l'image radar météorologique (1),
   g) la fonction de décision est appliquée à une zone partielle (11) ou à plusieurs zones partielles (11) de l'image radar météorologique (1) et la valeur de résultat (W, ERR) respective de la fonction de décision est considérée pour déterminer s'il existe une erreur de mesure ou un artéfact dans la zone partielle (11) concernée contrôlée de l'image radar météorologique (1).

2. Procédé selon la revendication 1, **caractérisé en ce que** la position ou la présence d'une erreur ou d'un artéfact trouvés sont associées à la sous-région (16) qui est associée à une zone partielle (11) de l'image radar météorologique (1), pour laquelle le résultat respectif de la fonction de décision correspond à la première valeur de résultat (ERR) indiquant une perturbation.

3. Procédé selon l'une quelconque des revendications précédentes, **caractérisé en ce qu'**il est défini un nombre de zones partielles (11) de l'image radar météorologique (1), lesquelles comportent chacune la grandeur prédéfinie.

4. Procédé selon l'une quelconque des revendications précédentes, **caractérisé en ce qu'**il est défini une pluralité de deuxièmes valeurs de résultat (W1, ..., W10), pour chaque deuxième valeur de résultat (W1, ..., W10) est défini respectivement un nombre de sous-images de référence (31) non perturbées, dans la région associée desquelles prédomine respectivement le même type de cellules de précipitations,
   une optimisation étant effectuée au cours du procédé d'optimisation de telle sorte que la fonction de décision fournit, en cas d'application à l'une des sous-images de référence (21) perturbées, une première valeur de résultat (ERR) indiquant une perturbation et, en cas d'application à l'une des sous-images de référence (31) non perturbées, l'une des deuxièmes valeurs de résultat (W1, ..., W10), et
   la fonction de décision est appliquée à une zone partielle (11) ou à plusieurs zones partielles (11) de l'image radar météorologique (1) et la valeur de résultat (W1, ..., W10, ERR) respective de la fonction de décision est considérée pour déterminer s'il existe une erreur de mesure ou un artéfact ou l'un des types de cellules de précipitations définis dans la zone partielle (11) concernée de l'image radar météorologique (1).

5. Procédé selon l'une quelconque des revendications précédentes, **caractérisé en ce que** le procédé d'optimisation considéré est un procédé appliquant la méthode des k plus proches voisins.

6. Procédé selon l'une quelconque des revendications précédentes, **caractérisé en ce que** pour chaque valeur de résultat (W, ERR) et/ou pour chaque deuxième valeur de résultat (W1, ..., W10) associée à un type de cellule de précipitation est défini respectivement un nombre de 50 à 500, en particulier de 200 à 350 sous-images de référence (21, 31).

7. Procédé selon l'une quelconque des revendications précédentes, **caractérisé en ce que** les zones partielles prélevées dans les images radar météorologiques (1), les sous-images de référence (21) perturbées, ainsi que les sous-images de référence (31) non perturbées ont une forme rectangulaire ou carrée avec une longueur de bord entre 30 et 150 pixels.

8. Procédé selon l'une quelconque des revendications précédentes, **caractérisé en ce qu'**à chacune des zones partielles (11) est associé un pixel de référence (111), situé en particulier en leur centre, et **en ce qu'**à ce pixel de référence (111) est associée la valeur de résultat (W1, ..., W10, ERR) respective, et **en ce que** des pixels (11), auxquels est associée la première valeur de résultat (ERR), sont sélectionnés et/ou marqués comme des pixels (51) incorrects, sujets à des erreurs de mesure ou des artéfacts.

9. Procédé pour la détection d'erreurs de mesure ou d'artéfacts dans une image radar météorologique (1) enregistrée au moyen d'un radar météorologique (12), selon l'une des revendications précédentes, dans lequel

a) l'image radar météorologique (1) est disponible sous la forme d'une image numérique bidimensionnelle, chaque pixel (15) de l'image radar météorologique (1) étant associé respectivement à une sous-région (150) de la région (14) surveillée par le radar météorologique (12),
b) une valeur de réflectivité est associée à chaque pixel (15) et chaque valeur de réflectivité (I1,...) correspond à la réflectivité électromagnétique, déterminée avec le radar météorologique (12), des couches d'air dans la zone de la sous-région (150) associée au pixel (15) respectif,

**caractérisé en ce que**

a) il est défini un nombre d'objets géométriques (41, 42) en rapport avec l'image radar météorologique (1),
b) une transformée de Hough est effectuée sur la base des objets géométriques (41, 42, 43) définis, moyennant quoi une image de la transformée de Hough (4) est établie, respectivement un pixel (45) de l'image de la transformée de Hough (4) étant associé à chacun des objets géométriques (41, 42, 43) définis,
c) **en ce que** l'on sélectionne les pixels (45) de l'image de la transformée de Hough (4) dont la valeur est supérieure à une valeur seuil (S) définie ou calculée à l'appui de l'image de la transformée de Hough (4), et
d) **en ce que** l'on détermine les objets géométriques (41, 42, 43) définis qui sont associés à l'un des pixels (45) sélectionnés de l'image de la transformée de Hough (4), et **en ce que** des pixels (11) à l'intérieur de ces objets géométriques (41, 42, 43) sont sélectionnés et/ou marqués en tant que pixels (51) incorrects sujets à des erreurs de mesure ou des artéfacts.

10. Procédé selon la revendication 9, **caractérisé en ce que** l'image de la transformée de Hough (4) est une image bidimensionnelle, à chacun des pixels (45) de l'image de la transformée de Hough (4) est associé respectivement un objet géométrique (41, 42, 43) paramétré avec respectivement deux paramètres (X, Y) et s'étendant dans l'image radar météorologique (1), les deux coordonnées (X, Y) de chaque pixel de l'image de la transformée de Hough (4) concordant respectivement avec l'un des paramètres (X, Y).

11. Procédé selon la revendication 10 ou 11, **caractérisé en ce que** les objets géométriques (41, 42, 43) considérés sont des arcs de cercle, les arcs de cercle (41) comportant un centre commun prédéfini, qui concorde avec la position du radar météorologique (12) dans l'image radar météorologique (1), le rayon de l'arc de cercle (41), ainsi qu'une zone angulaire et/ou portion définie sont considérés en tant que paramètres (x, y), l'arc de cercle (41) concerné étant divisé de préférence en un nombre de portions se chevauchant les unes les autres et dont chaque zone angulaire par rapport au centre du cercle correspond respectivement à une valeur de paramètre.

12. Procédé selon la revendication 10, **caractérisé en ce que** les objets géométriques considérés sont des droites (42), le sens du tracé des droites (42), ainsi que la différence des coordonnées de l'un des points de bordure, de préférence dans le bord gauche ou droit, de l'image radar météorologique (1), à travers lequel passe la droite, étant considérés comme paramètres (X, Y).

**13.** Procédé selon l'une quelconque des revendications 10 à 12, **caractérisé en ce que** les objets géométriques considérés sont des lignes de contour d'ellipses (43) dont le centre ou foyer concorde avec la position du radar météorologique (12) dans l'image radar météorologique (1), les longueurs des deux demi-axes étant définies comme paramètres (X, Y).

**14.** Procédé selon l'une quelconque des revendications 9 à 13, **caractérisé en ce que** la valeur seuil (S) considérée est une valeur de 60 % à 90 % de la valeur de pixel maximale à l'intérieur de l'image de la transformée de Hough (4).

**15.** Procédé selon l'une quelconque des revendications précédentes, **caractérisé**

> a) **en ce que** l'image radar météorologique (1) est examinée par le procédé selon la revendication 8 pour constater des erreurs de mesure ou des artéfacts, et une image d'erreur (5) est établie,
> b) **en ce que** l'image radar météorologique (1) est examinée avec le procédé selon l'une des revendications 9 à 14 pour constater des erreurs de mesure ou des artéfacts, et
> c) **en ce qu'**un pixel (11) est ensuite sélectionné et/ou marqué comme pixel (51) incorrect, lorsqu'il a été sélectionné et/ou marqué comme pixel (51) incorrect au moins selon l'une des deux étapes a) ou b) précédentes, en particulier selon les deux étapes a) et b).

**16.** Procédé selon la revendication 15, **caractérisé en ce que** pour le cas où un pixel (11) a été reconnu et/ou marqué comme pixel (51) incorrect seulement dans l'une des deux étapes a) et b) de la revendication 15,
on considère un nombre d'images radar météorologiques (1') supplémentaires, en particulier deux, enregistrées avec le même radar météorologique (12) directement avant la capture de l'image radar météorologique (1) respective,
la présence d'une erreur de mesure ou d'un artéfact étant confirmée lorsque la valeur de résultat (W1, ..., W10, ERR) pour le pixel (11) concerné n'est pas identique dans les images radar météorologiques (1') supplémentaires enregistrées directement au préalable.

**17.** Procédé selon l'une quelconque des revendications précédentes, en particulier selon la revendication 16, **caractérisé en ce qu'**au moins 2,5 minutes, en particulier 2,5 minutes ou 5 minutes se situent entre les deux instants de capture des images radar météorologiques (1).

**18.** Support de données sur lequel est stocké un programme informatique permettant la mise en oeuvre du procédé selon l'une des revendications précédentes.

**19.** Programme informatique permettant la mise en oeuvre du procédé selon l'une des revendications précédentes 1 à 17.

10   15

1

# Fig. 1

2

11'

14

117

116

110

12    19    19'

# Fig. 2

Fig. 3a

Fig. 3b

Fig. 3c

Fig. 3d

Fig. 4a

Fig. 4b

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040239550 A1